# EUROPEAN PATENT SPECIFICATION

(11) **EP 2 805 891 B1**
(45) Date of publication and mention of the grant of the patent: **24.08.2016**
(21) Application number: 14169175.8
(22) Date of filing: 20.05.2014
(51) Int. Cl.: B65B 11/00, B65B 35/52, B65G 57/30

(54) **Packaging machine**
Verpackungsmaschine
Machine d'emballage

(30) Priority: 24.05.2013 IT BO20130248
(43) Date of publication of application: 26.11.2014
(73) Proprietor: G.D S.p.A., 40133 Bologna (IT)
(72) Inventor: Tale', Fabrizio, 40133 Bologna (IT); Campagnoli, Enrico, 40019 Sant'Agata Bolognese (Bologna) (IT)
(74) Representative: Bianciardi, Ezio

(56) References cited:
- EP-A1- 0 337 958
- EP-A1- 0 396 995
- US-A1- 2006 288 661

## Description

This invention relates to a packaging machine and, more specifically, to a machine known as "cartoner" for packing loose products into cartons or boxes.

In the state of the art, packaging machines of this kind comprise a first product feed line, at the end of which the products are suitably arranged in groups composed of two or more superposed layers, each layer being composed of a plurality of aligned products. Downstream of the first product feed line there is normally a second line, known as "cartoner", usually located at right angles to the first line, along which the products are packed into respective boxes or cartons, for example of cardboard.

More specifically, along the second line, a carton blank is folded around the group of products to form the carton containing the products themselves.

Alternatively, the groups are inserted into preformed cartons which are first opened by an operation known as "squaring" to form a tubular structure into which the group of products is inserted. The cartons are then folded at the ends in order to close them.

To form the groups of products to be inserted into the cartons, the prior art solutions comprise a lift/lower system by which a layer of products is placed on top of the one preceding it. In practice, a conveyor belt feeds a first layer of products onto a lift/lower surface which is movable vertically downwards.

The lift/lower surface is lowered and the conveyor belt feeds a second layer onto the first. This procedure is repeated for all the layers to form the aforementioned group.

Once the group of layers is formed, a pusher urges the group onto the second line, where the group is packed into a carton.

The lift/lower system of prior art packaging machines has some disadvantages.

A first disadvantage is due to the fact that the lift/lower system is slow compared to the other parts of the packaging machine whose performance is thus reduced.

Also, the lift/lower system is not versatile in that its up/down stroke is fixed as a function of the expected height of the group of products to be cartoned.

In this context, the main technical purpose of this invention is to propose a packaging machine which is free of the above mentioned disadvantages.

It is known from EP0396995 a stacking device comprising holding and lifting couples of arms developing in a curved shape which develop around a respective common hinge. The couples of arms are so designed that each arm of each couple of arm is able to engage and lift a package by its lower surface whilst the other arm is performing a return movement to engage the next pack.

It is also known from EP0337958 a stacking device comprising holding and lifting couples of arms so designed that each arm of each couple of arm is able to engage and lift a package by its lower surface whilst the other arm is performing a return movement to engage the next pack.

This invention has for an aim to provide a packaging machine that is faster than prior art machines.

Another aim of this invention is to provide a packaging machine which is more versatile than prior art machines and that is to say, more specifically, a machine which can pass from handling products or groups of products of one size to products or groups of products of another size without problems.

In other words, one aim of the invention is to provide a packaging machine which facilitates changeover operations.

The technical purpose and aims specified are substantially achieved by a product packaging machine according to claim 1 and a product packaging method according to claim 9.

Further features of the invention and its advantages are more apparent in the non-limiting description below, with reference to a preferred but non-exclusive embodiment of a packaging machine, as illustrated in the accompanying drawings, in which:

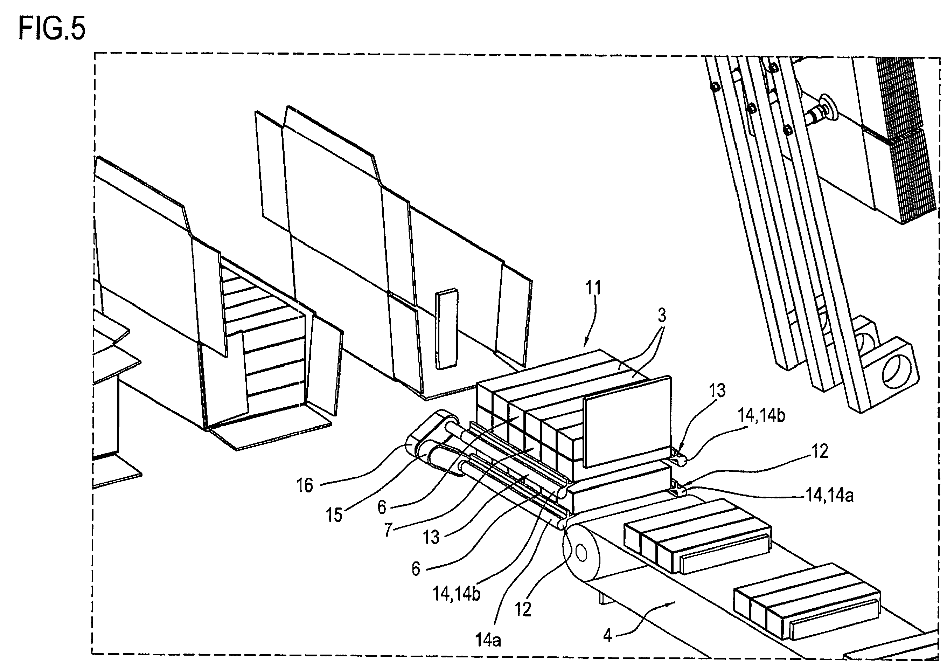

- Figures 1 to 6 are schematic perspective views, with some parts cut away for greater clarity, of a packaging machine according to this invention in a sequence of operating steps;
- Figures 7 to 8 are schematic front views of a detail of the packaging machine according to the invention in a sequence of operating steps.

With reference to the accompanying drawings, the numeral 1 denotes a packaging machine according to this invention.

The machine 1 is of the type known as "cartoner" designed to package groups 2 of products 3 into a respective pack 9.

More specifically, the products 3 are containers, preferably for toothpaste tubes, not illustrated.

The machine 1 comprises a conveyor 4 for feeding the products 3 in sequence along an axis D in a feed direction V and a grouping station 5 for the products 3 located downstream of the conveyor 4 along the feed direction V.

The conveyor 4 is in the form of a conveyor belt trained around a drive roller and a driven roller.

At the grouping station 5, the products 3 are grouped into a group 2 comprising at least a first and a second layer 6 and 7 of products 3. More specifically, each layer 6, 7 comprises one or more of the products 3.

The first and the second layer 6 and 7 have respective flanks 20, an underside face 25 and a top face 10.

In the embodiment illustrated by way of example, the group 2 of products 3 is made up of four layers 6, 7, each of which is defined by six products 3 placed side by side.

Downstream of the grouping station 5, there is a packaging station 23.

At the packaging station 23, the machine 1 comprises means 8 for packing each group 2 of products 3.

The packing means 8 are located downstream of the grouping station 5 along the feed direction V to package the group 2 of products 3 into the respective pack 9.

Preferably, the pack 9 is obtained from a pre-weakened flat blank which is folded in customary manner around the group 2 of products 3.

In an alternative embodiment, the pack 9 is obtained by "squaring" or opening pre-formed containers.

At the grouping station 5, the machine 1 comprises stacking means 11, by which at least the first and the second layer 6 and 7 are stacked from the bottom up.

In other words, the stacking means 11 stack the layers 6, 7 of the groups 2 of products from the bottom up by placing the first layer 6, or top layer, and then placing the second layer 7, or bottom layer, under it.

In other words, the stacking means 11 are adapted to stack one layer 6, received later, under one or more layers 6, 7, received earlier, to form the required group 2 of products 3 relative to a stacking axis A. In the embodiment described, the stacking axis A extends vertically at right angles to the feed axis D of the products 3.

The stacking means 11 comprise a first and a second pair 26, 27 of arms 15, 16, located on opposite sides of the stacking axis A and each comprising at least a first and a second arm 15, 16.

The first and the second arm 15, 16 of each pair 26, 27 are connected to a single hinge C1 located at the same first end 15a, 16a of the first and the second arm 15, 16.

The first and the second arm 15, 16 of each pair 26, 27 comprise a respective first and second profiled section 14a, 14b for supporting the first and second layers 6, 7 of products 3, each connected by means of a respective second hinge C2 at a respective second end 15b, 16b of the first and the second arm 15, 16, opposite the first end 15a, 16a.

The second hinge C2 of each first and second profiled section 14a, 14b allows the first and the second profiled section 14a, 14b to rotate independently of the rotation of the arms 15, 16 about the first hinge (C1).

The first and the second profiled section 14a, 14b of each pair 26, 27 of arms 15, 16 rotates about the respective second hinge C2 in a direction of rotation opposite to the direction of rotation of the respective first and second arm 15, 16 about the first hinge C1.

The first and the second profiled section 14a, 14b of each pair 26, 27 of arms 15, 16 rotates about the second hinge C2 simultaneously with the rotation of the first and second arm 15, 16 about the respective first hinge C1.

The first and second profiled sections 14a, 14b define respective pairs 14 of profiled sections.

The stacking means 11 comprise at least first and second retaining elements 12 and 13.

The first arm 15 and the first profiled section 14a and the second arm 16 and the second profiled section 14b of each pair 26, 27 constitute first and second retaining elements 12, 13.

The first profiled section 14a and the second profiled section 14b extend mainly along an axis parallel to the feed axis D of the products 3.

Advantageously, the products 3 are fed along the first profiled section 14a and the second profiled section 14b along an axis parallel to the feed axis D of the products 3.

Each profiled section 14a, 14b has a cross section which is preferably in the shape of an "L", along an axis transversal to the feed axis D of the products 3, so as to act as a lateral guide during the translational movement of the products 3.

Each profiled section 14a, 14b comprises a respective flat supporting surface 17 and a respective side wall 18.

The flat supporting surface 17 and the side wall 18 are contiguous to each other and define the cross section of the profiled section, and more specifically, the L-shaped cross section, transversal to the feed axis D.

The flat supporting surface 17 is designed to come into contact with a portion of the underside face 25 of a respective layer 6, 7 of products 3.

Advantageously, the flat supporting surface 17 remains parallel to the underside contact face 25 of the layers 6, 7 of products 3 while the layers 6, 7 of products 3 are being stacked relative to the stacking axis A.

The side wall 18 is designed to come into contact with one of the flanks 20 of a respective layer 6, 7 of products 3.

The stacking means 11 rotate about the first and the second hinge C1, C2.

More precisely, the first and the second profiled section 14a and 14b of each pair 14 of the first and second retaining elements 12 and 13 rotate about the respective second hinge C2.

The hinges C1 and C2 define respective parallel axes of rotation, and in particular, parallel to the feed axis D.

More specifically, the first and the second arm 15 and 16 are connected, respectively, to the first and the second profiled section 14a and 14b by means of the second hinge C2 and are hinged to each other at the first hinge C1.

Advantageously, the first and second arms 15, 16 of the first and second retaining elements 12 and 13 are hinged to each other and rotate about the same hinge C1.

The first and second retaining elements 12 and 13 move alternately from a first operating position for retaining one of either the first or the second layer 6, 7 of products 3 to a second operating position for retaining one or more layers 6, 7 of products 3.

In moving from the first to the second operating position, the first and the second retaining elements 12 and 13 raise one of either the first or the second layer 6 or 7 from the bottom up.

More specifically, at the first operating position, one of either the first or the second layer 6, 7 of products 3 is supported on one of either the first or the second retaining element 12, 13.

At the second operating position, two or more layers 6, 7 of products 3 are supported in the raised position until the group 2 of products 3 is formed.

Once the group 2 of products 3 is formed, this group is unloaded from the stacking means 11 at the second operating position of the first and second retaining elements 12 and 13.

The first and second retaining elements 12 and 13 are synchronized with each other in such a way that the first retaining elements 12 move from the first to the second operating position when the second retaining elements 13 move from the second to the first operating position, and vice versa.

From the first to the second operating position, and vice versa, the first and second retaining elements 12, 13 rotate about the first and the second axis of rotation 11a and 11b by a respective quantity equal to the size of the angle of rotation.

More specifically, in order to produce the alternating movement of the first and second retaining elements 12 and 13 from the first to the second operating position and from the second to the first operating position, the size of the angle of rotation of the first retaining elements 12 is different from the size of the angle of rotation of the second retaining elements 13.

More precisely, to move from the first to the second operating position, the first or the second retaining elements 12, 13 rotate by a quantity equal to the size of a first angle of rotation α1.

More specifically, the first and the second arm 15, 16 of each pair 26, 27 rotate about the first hinge C1 by a respective quantity equal to the size of the angle of rotation α1, α2.

From the first to the second operating position, and vice versa, the size of the angle of rotation α1, α2 of the first arm 15 is different from the size of the angle of rotation α1, α2 of the second arm 16.

To move from the second to the first operating position, the first or the second arms 15, 16 rotate by a quantity equal to the size of a second angle of rotation α2, greater than the first angle of rotation α1.

Since the first and second retaining elements 12 and 13 are synchronized in such a way that when the first retaining elements 12 move from the first to the second operating position, the second retaining elements 13 move from the second to the first operating position, and vice versa, it follows that if the first arms 15 rotate by a quantity equal to the size of a first angle α1, the second arms 16 rotate by a quantity equal to the size of a second angle α2 of rotation, and vice versa.

In use, the conveyor 4 feeds the products 3 along the axis D in a feed direction V.

Preferably, the products 3 transported by the conveyor 4 are pre-grouped in a row along the feed axis D.

In the embodiment illustrated by way of example, the products 3 transported by the conveyor 4 are pre-grouped in a row by three along the feed axis D.

Alternatively, the products 3 are transported individually by the conveyor 4.

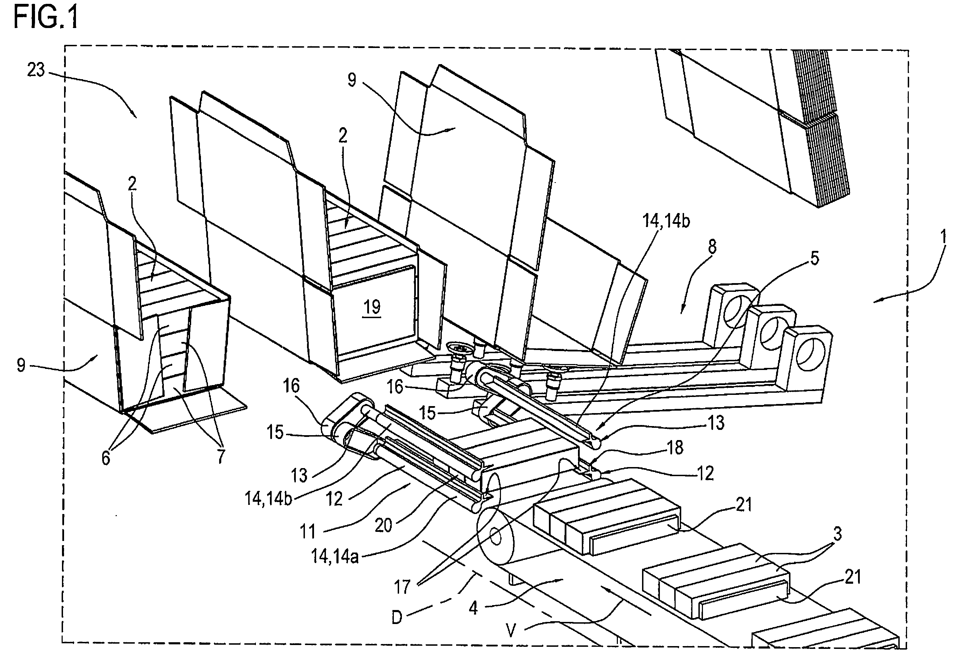

At the grouping station 5, a first pusher 21 transfers the products 3 transported by the conveyor 4 onto the stacking means 11. More specifically, the products 3 are transferred onto the first retaining elements 12 which are positioned at their first operating position, as illustrated in Figure 1.

More precisely, the products 3 move translationally along the flat supporting surface 17 of the first profiled section 14a of the first retaining elements 12.

The products 3 are loaded onto the first retaining elements 12 until the first layer 6 of products 3 is formed.

In this embodiment, the first and the second layer 6, 7 of products 3 comprise six products 3 and are formed when two rows of three products 3 each are transferred onto the stacking means 11.

It should be noted that, advantageously, there is a gap 22 between the flanks 20 of the first layer 6 of products 3 and the side walls 18 of the first profiled section 14a of the first retaining elements 12.

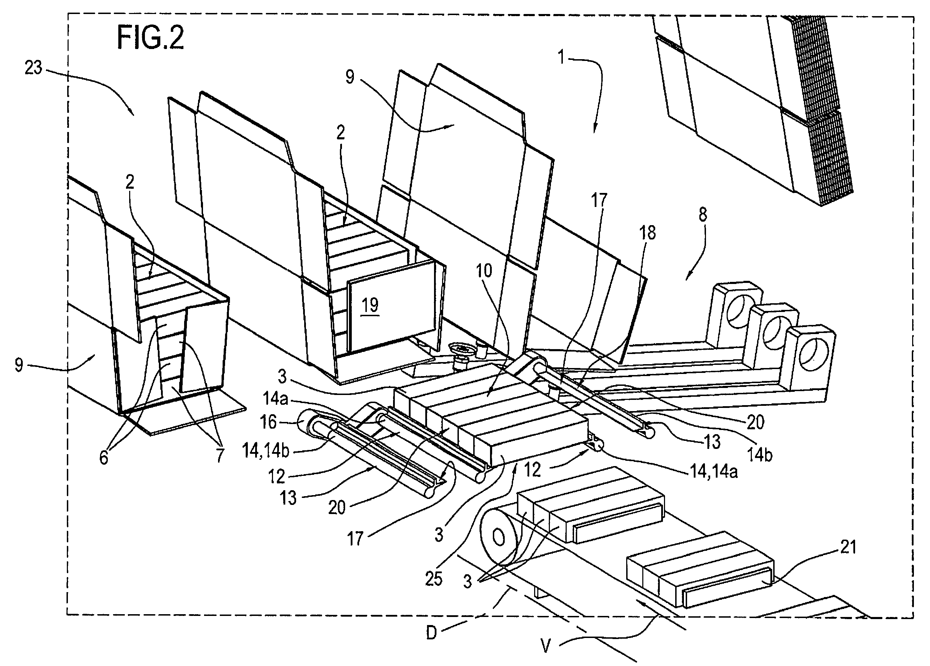

The gap 22 prevents the products 3 from getting wedged as they move along the profiled sections 14a, 14b of the stacking means 11. Once the first layer 6 of products 3 is loaded onto the first retaining elements 12, the latter move from the first operating position to the second operating position, lifting the first layer 6 of products 3 from the bottom up, as illustrated in Figure 2.

During the movement from the first operating position to the second operating position, the first arms 15 rotate simultaneously about the first hinge C1.

More specifically, the first arms 15 rotate about the first hinge C1 by a quantity equal to the size of a first angle of rotation α1.

During the rotation of the first arms 15, the respective first profiled sections 14a rotate about the respective second hinge C2 in a direction of rotation opposite to that of the first arms 15. Advantageously, the rotation of the profiled sections 14a, 14b in the opposite direction to that of the arms 15, 16 allows best use to be made of the flat supporting surface 17 of the profiled sections 14a, 14b, maximizing the available surface area of the flat supporting surface 17.

In effect, thanks to the opposite rotation about the second hinge C2, the distance between the first profiled sections 14a of the first retaining elements 12, measured transversely to the feed axis D, diminishes until the side walls 18 of the first profiled sections 14a come into abutment against the flanks 20 of the first layer 6 of products 3.

In other words, the first profiled sections 14a of the first retaining elements 12 move closer together by a quantity substantially equal to the gap 22.

When the side walls 18 of the first profiled section 14a are in contact with the flanks 20 of the first layer 6 of products 3, the first profiled sections 14a of the first retaining elements 12 are positioned at a minimum distance from each other, measured transversely to the feed axis D.

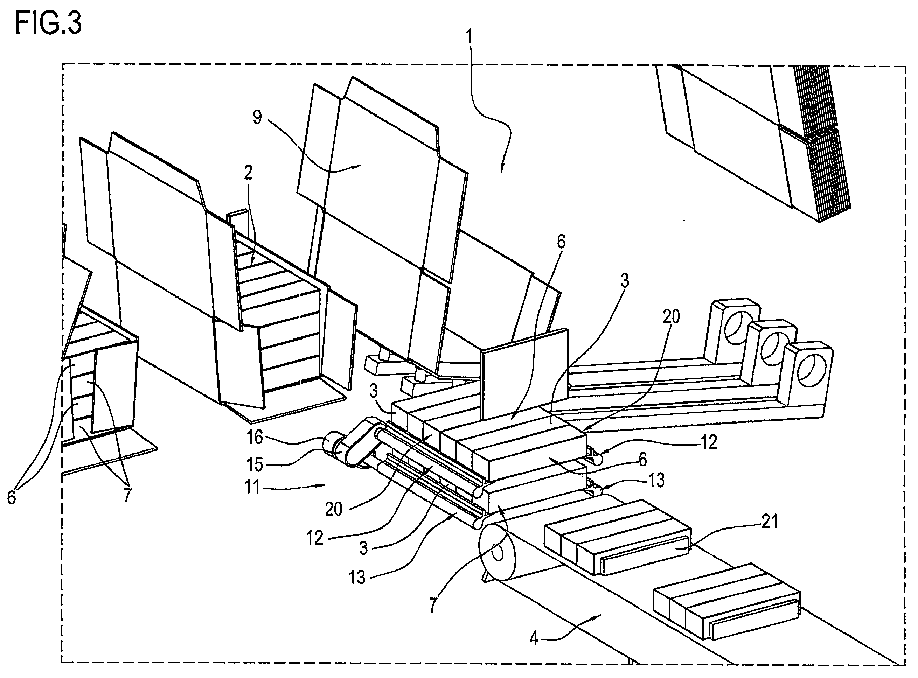

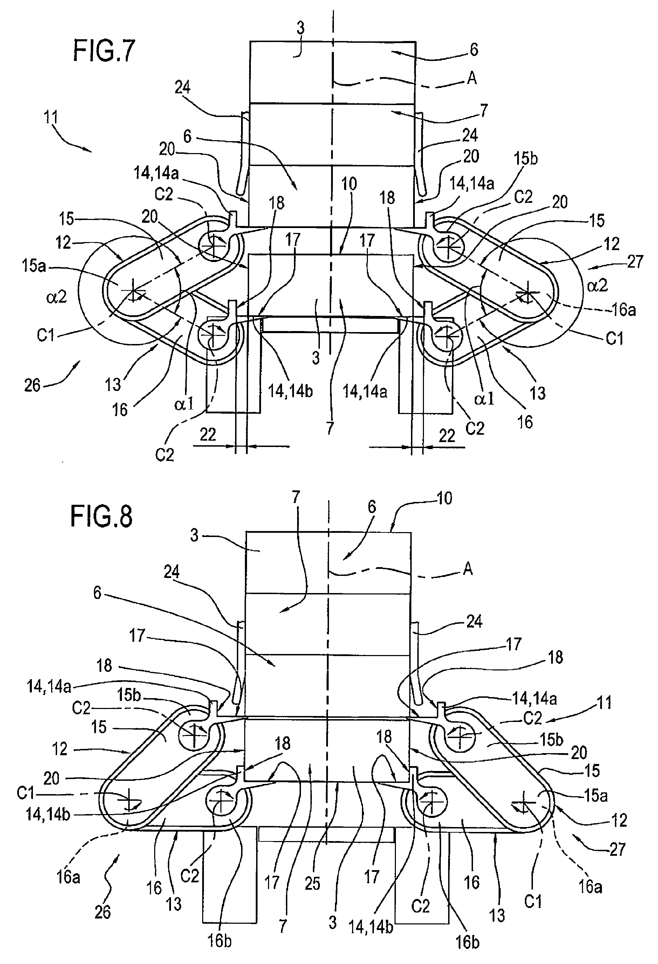

As the first arms 15 continue to rotate about the first hinge and the first profiled sections 14a continue to rotate about the respective second hinges C2, the first profiled sections 14a of the first retaining elements 12 move apart, away from the position where they are at the minimum distance from each other. On reaching the second operating position, the first retaining elements 12 hold the first layer 6 of products 3 in the raised position, while the second retaining elements 13 are positioned at the first operating position to form the second layer 7 of products 3, as illustrated in Figures 3 and 7. During the formation of the layers 6, 7 of products 3, both the first and the second retaining elements 12 and 13 remain stationary at their respective positions.

In this case, while the second layer 7 of products 3 is being formed on the second retaining elements 13, the first retaining elements 12 hold the first layer 6 of products 3 in the raised position.

In other words, the stacking means 11 raise the first layer 6 from the bottom up and place the second layer 7 under the first layer 6, from below.

It should be noted that for the formation of the second layer 7 of products 3 on the second retaining elements 13 and for the movement of the second retaining elements 13 from the first to the second operating position, the same considerations made above in connection with the first retaining elements 12 also apply to the second arms 16 and the second profiled sections 14b.

In effect, once the second layer 7 of products 3 is formed on the second retaining elements 13, the latter move from the first operating position to the second operating position, lifting the second layer 7 of products 3 from the bottom up.

During the movement from the first operating position to the second operating position, the second arms 16 rotate about the first hinge C1.

More specifically, the second arms 16 rotate about the first hinge C1 by a quantity equal to the size of the first angle of rotation α1. Simultaneously with the movement of the second retaining elements 13 from the first to the second operating position, the first retaining elements 12 move from the second to the first operating position. More specifically, the first arms 15 rotate respectively and simultaneously about the first hinge C1 by a quantity equal to the size of the second angle of rotation α2.

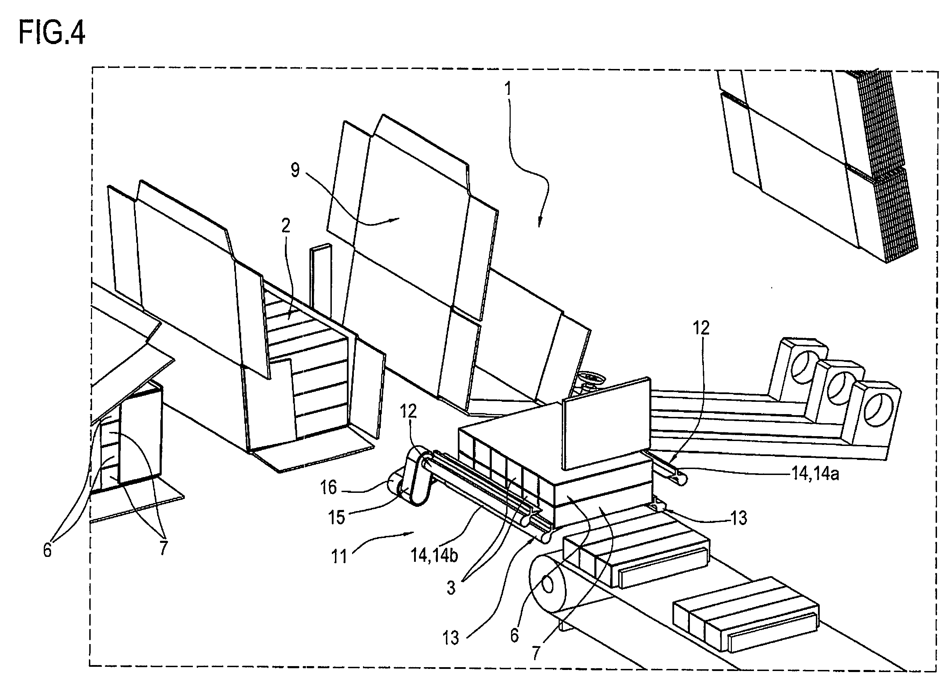

During the rotation of the first arms 15 about the first hinge C1, the distance between the profiled sections 14a of the first retaining elements 12, measured transversely to the feed axis D, increases until the flat supporting surfaces 17 of the first profiled sections 14a slide out from under the first layer 6 of products 3, releasing it on the second layer 7 of products 3, supported by the second retaining elements 13, as illustrated in Figures 4 and 8.

It should be noted that as the first and second profiled sections 14a, 14b move towards and away from each other, they maintain their positions in the sense that the respective flat supporting surfaces 17 remain parallel to the underside contact face 25 of the layers 6, 7 of products 3 relative to the stacking axis A.

That is because the first and the second profiled section 14a, 14b of each pair 26, 27 of arms 15, 16 rotates about the second hinge C2 in a direction of rotation opposite to the direction of rotation of the respective first and second arms 15, 16 about the first hinge C1.

It should be noted that, advantageously, the first layer 6 of products 3 is released onto the second layer 7 of products 3 when the second profiled sections 14b of the second retaining elements 13 are at a minimum distance from each other, measured transversely to the feed axis D, and their side walls 18 are in contact with the flanks 20 of the second layer 7.

That way, the base of the layers 6, 7 to be stacked - in this particular case, of the second layer 7 - is stable.

The stacking of the layers 6, 7 actually occurs during the movement from the first to the second operating position of one of either the first or the second retaining elements 12 or 13 and movement from the second to the first operating position of the other of either the first or the second retaining elements 12 or 13.

Once the first layer 6 is released onto the second layer 7, the first retaining elements 12 continue rotating about the first hinge C1 towards the first operating position and, simultaneously, the second retaining elements 13 continue rotating about the first hinge C1 towards the second operating position.

At this point, the second profiled sections 14b keep the first and second layers 6 and 7, now stacked on each other, in the raised position.

It should be noted that if the group 2 of products 3 is composed of more than two layers 6, 7, the stacking means 11 continue stacking layers 6, 7 until reaching the required number of layers.

More specifically, the first and second retaining elements 12 and 13 sequentially repeat the movements from the first to the second operating position, and vice versa, as a function of the number of layers 6, 7 to be stacked.

It should be noted that during the movement from the first to the second operating position of the second retaining elements 13, the same considerations apply as those made above in connection with the first retaining elements 12.

More specifically, the second arms 16 rotate about the first hinge C1 by a quantity equal to the size of the second angle of rotation α2.

Since the stacking means 11 work from the bottom up, at least one pair of guides 24 is provided along the flanks of the group 2 to prevent the stacked layers 6 and 7 from tipping over.

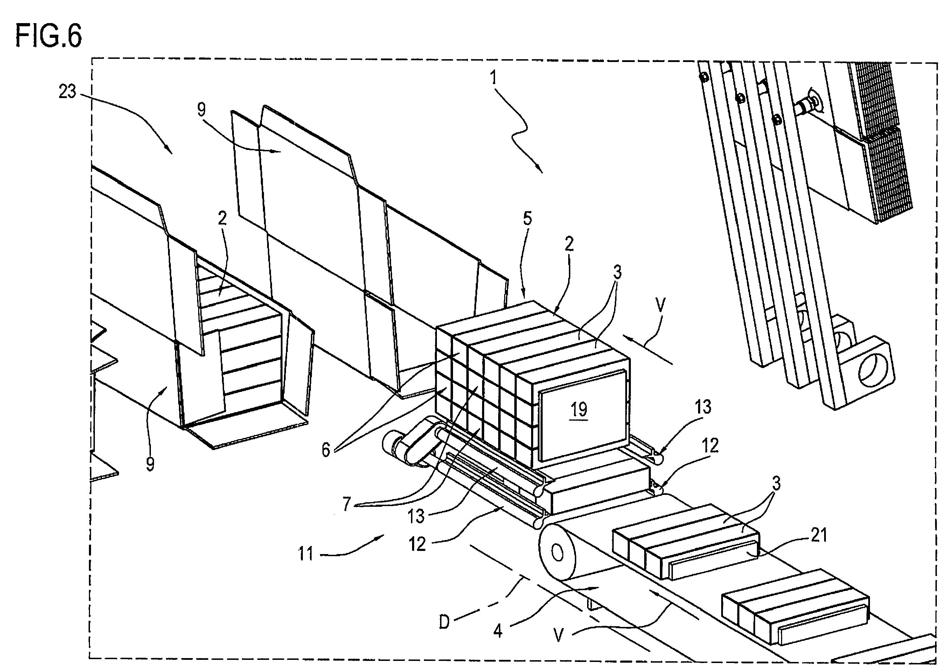

Upon completion of the group 2 of products 3, which in the case illustrated by way of an example is composed of four layers 6, 7, a second pusher 19 transfers the group 2 from the grouping station 5, in the feed direction V, to the packaging station 23 where the packing means 8 package the group 2 in the pack 9, as illustrated in Figure 6. More specifically, the group 2 of products 3 moves translationally along the first or second profiled sections 14a and 14b from the grouping station to the packaging station 23.

This invention also relates to a product packaging method comprising a step of conveying the products 3 along a feed axis D in a feed direction V, a step of grouping the products 3 in a group 2 of products 3 comprising at least a first and a second layer 6 and 7 of products 3 and a step of packing the group 2 of products 3 to package the selfsame group 2 into a pack 9.

The step of grouping the products 3 comprises a step of stacking a layer 6, received later, under one or more layers 6, 7, received earlier, to form the required group 2 of products 3.

More specifically, the grouping step comprises a step of stacking the first and the second layer 6 and 7 from the bottom up.

The stacking step comprises a step of forming the first layer 6 and raising at least the first layer 6 from the bottom up and a step of retaining the first layer 6 in the raised position.

During the step of retaining the first layer 6 in the raised position, the method comprises a step of forming the second layer 7 and releasing the first layer 6 onto the second layer 7 thereby stacking them.

It should be noted that the steps of forming the first layer 6, raising at least the first layer 6 from the bottom up and holding it in the raised position during the step of forming the second layer 7, and of releasing the first, raised layer 6 onto the second layer 7, thereby stacking them, are repeated in sequence until obtaining a group 2 of products 3 comprising a defined number of layers 6, 7.

The method comprises a step of raising the second layer 7 from the bottom up and the step of releasing the first layer 6 onto the second layer 7 occurs during the step of raising the second layer 7 from the bottom up.

Advantageously, the machine 1 is more versatile compared to the prior art since the stacking means 11 allow forming groups 2 of products 3 composed of a potentially variable number of layers 6, 7, since there are no physical limits on stacking due to the dimensions of the machine 1.

Moreover, the simultaneous rotation of the first and second arms 15, 16 about the first hinge C1 located at the same first end 15a, 16a allows the machine 1 to operate at higher speeds.

## Claims

1. A product packaging machine comprising a conveyor (4) for feeding the products (3) in sequence;
a grouping station (5) for the products (3) received in sequence from the conveyor (4), for grouping the products (3) into a group (2) of products (3); each group (2) comprises at least a first and a second layer (6, 7), each layer (6, 7) comprising one or more of the products (3) and being positioned one on top of the other;
the packaging machine (1) comprising means (8) for packing the groups (2) of products (3) to package the group (2) of products (3) in a respective pack (9), and comprising, at the grouping station (5), stacking means (11) which are designed to stack relative to a stacking axis (A) a layer (6), received later, under one or more layers (6, 7), received earlier, to form the required group (2) of products (3);
wherein the stacking means (11) comprise a first and a second pair (26, 27) of arms (15, 16), located on opposite sides of the stacking axis (A) and each comprising at least a first and a second arm (15, 16); the first and the second arm (15, 16) of each pair (26, 27) are connected to the same first hinge (C1) located at the same first end (15a, 16a) of the first and the second arm (15, 16).
**characterized in that** the first and the second arm (15, 16) of each pair (26, 27) comprise a respective first and second profiled section (14a, 14b) for supporting the first and second layers (6, 7) of products (3), each connected at a respective second end (15b, 16b) of the first and the second arm (15, 16), opposite the first end (15a, 16a), by means of a respective second hinge (C2); the second hinge (C2) of each first and second profiled section (14a, 14b) allows the first and the second profiled section (14a, 14b) to rotate independently of the rotation of the arms (15, 16) about the first hinge (C1).

2. The machine according to claim 1, wherein the first and the second profiled section (14a, 14b) of each pair (26, 27) of arms (15, 16) rotates about the respective second hinge (C2) in a direction of rotation opposite to the direction of rotation of the respective first and second arm (15, 16) about the first hinge (C1).

3. The machine according to claim 1 or 2, wherein the first and the second profiled section (14a, 14b) of each pair (26, 27) of arms (15, 16) maintains its position while the layers (6, 7) of products (3) are being stacked relative to the stacking axis (A).

4. The machine according to any one of the preceding claims**,** wherein the first and the second profiled section (14a, 14b) of each pair (26, 27) of arms (15, 16) comprises a respective flat surface (17) for supporting the layers (6, 7) of products (3) and parallel to the underside contact face (25) of the layers (6, 7) of products (3); the flat supporting surface (17) remaining parallel to the underside contact face (25) of the layers (6, 7) of products (3) while the layers (6, 7) of products (3) are being stacked relative to the stacking axis (A).

5. The machine according to any one of the preceding claims, wherein the first and the second profiled section (14a, 14b) of each pair (26, 27) of arms (15, 16) rotates about the second hinge (C2) simultaneously with the rotation of the first and second arm (15, 16) about the respective first hinge (C1).

6. The machine according to any one of the preceding claims, wherein the first arm (15) and the first profiled section (14a) and the second arm (16) and the second profiled section (14b) of each pair (26, 27) constitute first and second retaining elements (12, 13) which move alternatingly from a first to a second operating position, raising one of either the first or the second layer (6, 7) from the bottom up; at the first operating position, the first and the second retaining elements (12, 13) alternately supporting at least one of either the first or the second layer (6, 7) of products (3); at the second operating position, the first and the second retaining elements (12, 13) alternately supporting one or more layers (6, 7) of products (3) received later than the layers (6, 7) received earlier in the first operating position, until the group (2) of products (3) is completed.

7. The machine according to claim 7, wherein the first and the second retaining elements (12, 13) are coordinated with each other in such a way that the first retaining elements (12) move from the first to the second operating position while the second retaining elements (13) simultaneously move from the second to the first operating position, and vice versa.

8. The machine according to any one of the preceding claims, wherein the first and the second arm (15, 16) of each pair (26, 27) rotate about the first hinge (C1) by a respective quantity equal to the size of the angle of rotation (α1, α2); from the first to the second operating position, and vice versa, the size of the angle of rotation (α1, α2) of the first arm (15) being different from the size of the angle of rotation (α1, α2) of the second arm (16).

## Patentansprüche

1. Produktverpackungsmaschine, umfassend einen Förderer (4), um die Produkte (3) nacheinander zuzuführen, eine Gruppierungsstation (5) für die nacheinander vom Förderer (4) empfangenen Produkte (3), um die Produkte (3) in einer Gruppe (2) von Produkten (3) zu gruppieren, wobei jede Gruppe (2) mindestens eine erste und eine zweite Lage (6, 7) umfasst, wobei jede Lage (6, 7) ein oder mehrere Produkte (3) umfasst und jeweils aufeinander platziert ist, wobei die Verpackungsmaschine (1) Mittel (8) zum Verpacken der Gruppe (2) von Produkten (3) in einem jeweiligen Paket (9) umfasst, und umfassend an der Gruppierungsstation (5), Stapelmittel (11), die ausgestaltet sind, um relativ zu einer Stapelachse (A) eine später empfangene Lage (6) unter einer oder mehreren früher empfangenen Lagen (6, 7) zu stapeln, um die erforderliche Gruppe (2) von Produkten (3) zu bilden, wobei die Stapelmittel (11) ein erstes und ein zweites Paar (26, 27) Arme (15, 16) umfassen, die an entgegengesetzten Seiten der Stapelachse (A) angeordnet sind und jeweils mindestens einen ersten und einen zweiten Arm (15, 16) umfassen, wobei der erste und der zweite Arm (15, 16) eines jeden Paars (26, 27) mit demselben ersten Gelenk (C1) verbunden sind, das am selben ersten Ende (15a, 16a) des ersten und des zweiten Arms (15, 16) angeordnet ist, **dadurch gekennzeichnet, dass** der erste und der zweite Arm (15, 16) eines jeden Paars (26, 27) einen jeweiligen ersten und zweiten Profilabschnitt (14a, 14b) zum Stützen der ersten und der zweiten Schicht (6, 7) an Produkten (3) umfasst, jeweils verbunden mit einem jeweiligen zweiten Ende (15b, 16b) des ersten und des zweiten Arms (15, 16), gegenständig angeordnet zum ersten Ende (15a, 16a), mittels eines jeweiligen zweiten Gelenks (C2), wobei das zweite Gelenk (C2) eines jeden ersten und zweiten Profilabschnitts (14a, 14b) dem ersten und dem zweiten Profilabschnitt (14a, 14b) erlaubt, sich unabhängig von der Drehung der Arme (15, 16) um das erste Gelenk (C1) zu drehen.

2. Maschine nach Anspruch 1, wobei sich der erste und der zweite Profilabschnitt (14a, 14b) eines jeden Paars (26, 27) an Armen (15, 16) um das jeweilige zweite Gelenk (C2) in eine Drehrichtung drehen, die der Drehrichtung des jeweiligen ersten und zweiten Arms (15, 16) um das erste Gelenk (C1) entgegengesetzt ist.

3. Maschine nach Anspruch 1 oder 2, wobei der erste und der zweite Profilabschnitt (14a, 14b) eines jeden Paars (26, 27) an Armen (15, 16) seine Position beibehält, während die Lagen (6, 7) an Produkten (3) relativ zur Stapelachse (A) gestapelt werden.

4. Maschine nach einem der vorhergehenden Ansprüche, wobei der erste und der zweite Profilabschnitt (14a, 14b) eines jeden Paars (26, 27) an Armen (15, 16) eine jeweilige flache Oberfläche (17) umfassen, um die Lagen (6, 7) an Produkten (3) zu stützen, und parallel zur unterseitigen Kontaktfläche (25) der Lagen (6, 7) an Produkten (3), wobei die flache Stütztoberfläche (17) parallel zur unterseitigen Kontaktfläche (25) der Lagen (6, 7) an Produkten (3) bleibt, während die Lagen (6, 7) an Produkten (3) relativ zur Stapelachse (A) gestapelt werden.

5. Maschine nach einem der vorhergehenden Ansprüche, wobei sich der erste und der zweite Profilabschnitt (14a, 14b) eines jeden Paars (26, 27) an Armen (15, 16) um das zweite Gelenk (C2) gleichzeitig mit der Drehung des ersten und zweiten Arms (15, 16) um das jeweilige erste Gelenk (C1) dreht.

6. Maschine nach einem der vorhergehenden Abschnitte, wobei der erste Arm (15) und der erste Profilabschnitt (14a) und der zweite Arm (16) und der zweite Profilabschnitt (14b) eines jeden Paars (26, 27) erste und zweite Halteelemente (12, 13) darstellen, die sich abwechselnd von einer ersten in eine zweite Betriebsposition bewegen und entweder die erste oder die zweite Lage (6, 7) vom Boden anheben, wobei die ersten und zweiten Halteelemente (12, 13) mindestens entweder die erste oder die zweite Lage (6, 7) an Produkten (3) abwechselnd an der ersten Betriebsposition stützen und die ersten und zweiten Halteelemente (12, 13) an der zweiten Betriebsposition abwechselnd eine oder mehrere Lagen (6, 7) an Produkten (3) stützen, die später empfangen wurden als die Lagen (6, 7), die früher an der ersten Betriebsposition empfangen wurden, bis die Gruppe (2) an Produkten (3) vervollständigt ist.

7. Maschine nach Anspruch 7, wobei die ersten und die zweiten Haltemittel (12, 13) miteinander so koordiniert sind, dass sich die ersten Haltemittel (12) von der ersten in die zweite Betriebsposition bewegen, während sich die zweiten Haltemittel (13) gleichzeitig von der zweiten in die erste Betriebsposition bewegen und umgekehrt.

8. Maschine nach einem der vorhergehenden Ansprüche, wobei sich der erste und der zweite Arm (15, 16) eines jeden Paars (26, 27) um das erste Gelenk (C1) um eine jeweilige Menge gleich der Größe des Rotationswinkels (α1, α2) drehen, und zwar von der ersten in die zweite Betriebsposition und umgekehrt, wobei die Größe des Rotationswinkels (α1, α2) des ersten Arms (15) anders ist als die Größe des Rotationswinkels (α1, α2) des zweiten Arms (16).

## Revendications

1. Machine d'emballage de produits comprenant un transporteur (4) pour acheminer les produits (3) en séquence ; un poste de regroupement (5) pour les produits (3) reçus en séquence du transporteur (4), pour regrouper les produits (3) en un groupe (2) de produits (3) ; chaque groupe (2) comprend au moins une première et une seconde couches (6, 7), chaque couche (6, 7) comprenant un ou plusieurs produits (3) et étant située l'une sur l'autre ; la machine d'emballage (1) comprenant des moyens (8) pour emballer les groupes (2) de produits (3) pour emballer le groupe (2) de produits (3) dans un paquet respectif (9), et comprenant, au poste de regroupement (5), des moyens d'empilage (11) qui sont conçus pour empiler, par rapport à un axe d'empilage (A), une couche (6), reçue après, sous une ou plusieurs couches (6, 7), reçues avant, pour former le groupe (2) demandé de produits (3) ; dans laquelle les moyens d'empilage (11) comprennent une première et une seconde paires (26, 27) de bras (15, 16), situées sur des côtés opposés à l'axe d'empilage (A) et comprenant chacune au moins un premier et un second bras (15, 16) ; le premier et le second bras (15, 16) de chaque paire (26, 27) sont raccordés à la même première articulation (C1) située sur la même première extrémité (15a, 16a) du premier et du second bras (15, 16), **caractérisée en ce que** le premier et le second bras (15, 16) de chaque paire (26, 27) comprennent une première et une seconde sections profilées respectives (14a, 14b) pour soutenir la première et la seconde couches (6, 7) de produits (3), raccordées chacune à une seconde extrémité respective (15b, 16b) du premier et du second bras (15, 16), opposée à la première extrémité (15a, 16a), par l'intermédiaire d'une seconde articulation respective (C2) ; la seconde articulation (C2) de chaque première et chaque seconde sections profilées (14a, 14b) permet à la première et à la seconde sections profilées (14a, 14b) de tourner indépendamment de la rotation des bras (15, 16) autour de la première articulation (C1).

2. Machine selon la revendication 1, dans laquelle la première et la seconde sections profilées (14a, 14b) de chaque paire (26, 27) de bras (15, 16) tournent autour de la seconde articulation respective (C2) dans une direction de rotation opposée à la direction de rotation du premier et du second bras respectifs (15, 16) autour de la première articulation (C1).

3. Machine selon les revendications 1 ou 2, dans laquelle la première et la seconde sections profilées (14a, 14b) de chaque paire (26, 27) de bras (15, 16) maintiennent leur position pendant que les couches (6, 7) de produits (3) sont empilées par rapport à l'axe d'empilage (A).

4. Machine selon l'une quelconque des revendications précédentes, dans laquelle la première et la seconde sections profilées (14a, 14b) de chaque paire (26, 27) de bras (15, 16) comprennent une surface plate respective (17) pour soutenir les couches (6, 7) de produits (3) et parallèle à la face de contact sous-jacente (25) des couches (6, 7) de produits (3) ; la surface plate de support (17) restant parallèle à la face de contact sous-jacente (25) des couches (6, 7) de produits (3), pendant que les couches (6, 7) de produits (3) sont empilées par rapport à l'axe d'empilage (A).

5. Machine selon l'une quelconque des revendications précédentes, dans laquelle la première et la seconde sections profilées (14a, 14b) de chaque paire (26, 27) de bras (15, 16) tournent autour de la seconde articulation (C2) simultanément à la rotation du premier et du second bras (15, 16) autour de la première articulation (C1) respective.

6. Machine selon l'une quelconque des revendications précédentes, dans laquelle le premier bras (15) et la première section profilée (14a) et le second bras (16) et la seconde section profilée (14b) de chaque paire (26, 27) constituent des premiers et seconds éléments de retenue (12, 13) qui bougent en alternance d'une première à une seconde position de travail, soulevant du bas vers le haut soit la première couche soit la seconde couche (6, 7) ; à la première position de travail, les premiers et seconds éléments de retenue (12, 13) soutenant en alternance au moins soit la première couche soit la seconde couche (6, 7) de produits (3) ; à la seconde position de travail, les premiers et seconds éléments de retenue (12, 13) soutenant en alternance une ou plusieurs couches (6, 7) de produits (3) reçues après les couches (6, 7) reçues avant dans la première position de travail, jusqu'à ce que le groupe (2) de produits (3) soit complet.

7. Machine selon la revendication 7, dans laquelle les premiers et seconds éléments de retenue (12, 13) sont coordonnés l'un à l'autre de sorte que les premiers éléments de retenue (12) bougent de la première à la seconde position de travail, pendant que les seconds éléments de retenue (13) bougent simultanément de la seconde à la première position de travail, et vice versa.

8. Machine selon l'une quelconque des revendications précédentes, dans laquelle le premier et le second bras (15, 16) de chaque paire (26, 27) tournent autour de la première articulation (C1) selon une quantité respective égale à la mesure de l'angle de rotation (α1, α2) ; de la première à la seconde position de travail, et vice versa, la mesure de l'angle de rotation (α1, α2) du premier bras (15) étant différente de la mesure de l'angle de rotation (α1, α2) du second bras (16).
